# FASCICULE DE BREVET EUROPEEN

(11) **EP 3 074 698 B1**
(45) Date de publication et mention de la délivrance du brevet: **11.08.2021**
(21) Numéro de dépôt: 14814957.8
(22) Date de dépôt: 26.11.2014
(51) Int. Cl.: F24F 5/00, F25B 25/00, F25B 27/00, F25B 49/02

(54) **PROCÉDÉ DE CLIMATISATION SOLAIRE**
VERFAHREN FÜR SOLARKLIMAANLAGE
METHOD FOR SOLAR AIR CONDITIONING

(30) Priorité: 27.11.2013 FR 1361700
(43) Date de publication de la demande: 05.10.2016
(73) Titulaire: Artesol, 75116 Paris (FR)
(72) Inventeur: ROULET, François, 78110 Le Vesinet (FR); BAUDRY, Philippe, 78110 LE VESINET (FR)
(74) Mandataire: Demulsant, Xavier
(86) Numéro de dépôt international: PCT/FR2014/053039
(87) Numéro de publication internationale: WO 2015/079165

(56) Documents cités:
- EP-A2- 0 748 991
- FR-A1- 2 983 282
- FR-A1- 2 983 283
- US-A- 5 237 832
- US-A1- 2009 301 119
- None

## Description

L'invention a trait à la climatisation solaire, notamment mais non exclusivement pour les bâtiments tertiaires.

Pour l'année 2011, les logements et bâtiments tertiaires représentent 44% de la consommation énergétique finale française, la consommation d'énergie des bâtiments ayant augmenté de 30% au cours des trente dernières années du fait de l'accroissement du parc des bâtiments et de l'accroissement de la surface moyenne des logements, de l'augmentation du confort et de l'apparition de nouveaux besoins. La consommation totale d'énergie pour le secteur tertiaire était en France, en 2011, de l'ordre de 210 TWh, la climatisation représentant une consommation de l'ordre de 10 TWh par an. La consommation d'énergie d'un bâtiment est un facteur important lors des cessions d'actifs ou lors de l'évaluation d'un patrimoine foncier, notamment pour le secteur tertiaire.

L'Etat français s'est engagé, dans le cadre des lois Grenelle I et II, à réduire de 38% la consommation d'énergie dans les bâtiments existants entre 2006 et 2020, par la mise en œuvre de la Réglementation Thermique 2012 (*RT 2012*), une valeur de 50kWhep/(m².an) servant de référence pour les bâtiments neuf basse consommation (*BBC*), du secteur tertiaire ou d'habitation. A partir de 2020, les bâtiments à énergie positive (*Bepos*) devraient être la norme. Le paquet énergie climat de l'Union Européenne (*UE*) prévoit par ailleurs de porter à 20% la part des énergies renouvelables dans la consommation énergétique totale de l'UE. L'attractivité et la valeur d'un bâtiment neuf se mesurera à la qualité des solutions techniques mises en œuvre pour répondre à ces exigences de performance énergétique.

Les efforts de réduction de la consommation d'énergie portent sur l'amélioration du bâti, notamment pour la réduction des besoins hivernaux, les solutions préconisées augmentant l'imperméabilité et l'isolation des bâtiments. En parallèle, l'évolution de l'architecture a favorisé la construction de bâtiments faiblement inertes, plus ouverts sur l'extérieur avec de larges baies vitrées. Les gains solaires passifs sont donc améliorés, réduisant d'autant les consommations de chauffage.

La conjonction d'une forte isolation, d'une faible inertie et de larges ouvertures sur les orientations les plus ensoleillées mènent à une surchauffe estivale et le recours à la climatisation s'est donc massifié. Selon la commission européenne (*Energy Efficiency and Certification of Central Air Conditioners, DGTREN*), la surface climatisée en Europe a connu une hausse de 500% (comprenant les simples remplacements) entre les années 1980 et 2000.

Diverses techniques d'utilisation de l'énergie solaire pour la production de froid et la climatisation sont apparues récemment. Ces techniques peuvent être classées en deux grandes catégories : les systèmes thermiques et les systèmes électriques.

Les systèmes thermiques sont de deux types : systèmes thermomécaniques d'une part, systèmes à échanges de chaleur d'autre part.

Dans les systèmes thermomécaniques, l'énergie solaire est utilisée comme source de chaleur grâce à des capteurs solaires thermiques, dans une machine produisant un travail mécanique, lequel est à son tour utilisé pour produire du froid. Plusieurs variantes de ce principe général ont été proposées. Dans une première variante, la chaleur récupérée par les capteurs solaires thermiques met en mouvement un fluide qui lui-même actionne une turbine produisant de l'électricité, cette électricité peut être utilisée dans un cycle classique à compression (*cycle Rankine*/*compression de vapeur*). Dans une deuxième variante, la chaleur récupérée par les capteurs solaires thermiques est utilisée pour produire un jet de vapeur à très grande vitesse, ce jet provoquant dans son entourage un vide puissant qui permet de vaporiser de l'eau à faible température dans l'évaporateur et de refroidir l'ambiance, la vapeur ainsi créée étant refroidie dans un condenseur (cycle *à jet de vapeur*).

Dans les systèmes thermiques à échanges de chaleur, une absorption, une adsorption, ou une réaction chimique sont à l'origine de transferts de chaleur. Les systèmes sont à cycle fermé (adsorption physique avec un couple tel que zéolithe/eau, gel de silice/eau, charbon actif/méthanol ; adsorption chimique ; absorption liquide avec un couple tel que eau/bromure de lithium), ou à cycle ouvert (avec dessiccation solide par sorption à l'aide de gel de silice, zéolithe, chlorure de lithium ; avec dessiccation liquide, une solution absorbante telle que eau/chlorure de lithium, eau/chlorure de calcium assurant le refroidissement de l'air soufflé). Dans une installation à absorption liquide, un compresseur thermochimique (désorbeur/absorbeur) utilise un couple réfrigérant /liquide absorbant (solution saline) et une source de chaleur motrice. La solution saline à faible concentration d'absorbant est chauffée dans le désorbeur (ou générateur) grâce à la chaleur motrice, et libère de l'eau sous forme gazeuse, qui va se condenser dans le condenseur. La solution saline est ainsi concentrée. Le réfrigérant se vaporise dans l'évaporateur et est absorbé par la solution concentrée dans l'absorbeur. Dans une installation à adsorption solide, le gaz se fixe sur un matériau hautement poreux (gels de silice, zéolites). Deux masses de matériaux adsorbants sont alternativement chauffées par la source chaude pour désorber la vapeur d'eau qui va ensuite se condenser dans le condenseur. Puis l'eau est évaporée dans l'évaporateur où le froid est alors produit. Cette vapeur d'eau s'adsorbe ensuite sur le matériau adsorbant et le cycle recommence. Dans une installation à cycle ouvert (*desiccant cooling*) la climatisation du local se fait grâce à un système à air basé sur une centrale de traitement d'air (*CTA*), le cycle ouvert s'appuyant principalement sur l'utilisation de l'eau et de son potentiel de changement de phase pour refroidir l'air soufflé dans un local. Pour maximiser l'effet de la chaleur latente de vaporisation de l'eau, le flux d'air ventilé est tout d'abord desséché dans une roue à dessiccation ou dans un lit dans lequel est vaporisée une solution dessicante, puis refroidi dans un échangeur, et enfin humidifié adiabatiquement dans un laveur d'air.

Les systèmes électriques de froid solaire sont basés sur l'utilisation de l'électricité, l'énergie solaire étant transformée en électricité. Les systèmes électriques sont de deux grands types ; systèmes photovoltaïques (PV) à compression d'une part, système à effet Peltier d'autre part. Dans les systèmes PV à compression, un cycle conventionnel de compression est employé pour produire du froid. Dans les systèmes à effet Peltier, de la chaleur est obtenue en présence d'un courant électrique parcourant deux matériaux conducteurs de natures différentes en contact.

La mise en œuvre d'une climatisation solaire photovoltaïque semble a priori naturelle au vu du marché mondial des panneaux photovoltaïques et de la concordance entre besoin de climatisation et ensoleillement.

Le marché du photovoltaïque est en effet en forte croissance avec une importante réduction des prix de vente des capteurs. Selon le rapport 2012 de l'IEA (*International Energy Agency, Photovoltaic Power Systems Programme*), la puissance photovoltaïque installée est passée de moins de 10 GW en 2007 à près de 100 GW en 2012, dont environ 32 GW pour l'Allemagne, 70% des installations photovoltaïques dans le monde étant en toiture de bâtiments. Selon le rapport 2012 de l'Observatoire des énergies renouvelables (*Observ'ER*)*,* la puissance cumulée du parc de centrales solaires photovoltaïques au sein de l'Union Européenne est de 51GW, la France étant le quatrième Etat de l'UE en termes de puissance cumulée et connectée. Selon le rapport 2013 du Commissariat général au développement durable, le solaire photovoltaïque a représenté en France 0.17 millions de tep (contre 0.01 en 2009).

La mise en oeuvre d'une climatisation solaire photovoltaïque se heurte toutefois à de nombreux inconvénients.

Les dispositifs de l'état de la technique ne permettent pas de régler l'intermittence naturelle, avec peu ou pas d'emploi possible de l'énergie solaire la nuit, en début de matinée ou en fin d'après midi, ou en cas de temps fortement nuageux mais chaud.

Le stockage de l'électricité est couteux et les prix de rachat de l'électricité peuvent donner l'avantage à une réintroduction de l'électricité dans le réseau plutôt que son utilisation in situ.

La puissance appelée par un compresseur nécessite une grande surface de capteurs, la puissance spécifique étant d'environ 100 à 130W/m².

La grande diversité des solutions techniques proposées illustre les grandes difficultés de la mise en place d'une climatisation solaire.

Les dispositifs de climatisation solaire photovoltaïques présentés dans l'état de la technique sont d'ailleurs, pour l'essentiel, restés au stade de conception sans réalisation concrète, éventuellement de prototypes à petite échelle.

US 2009/301119 décrit un dispositif d'air conditionné fonctionnant avec l'énergie photovoltaïque et comprenant un système de stockage de froid.

FR 2983282 décrit une installation de refroidissement comprenant deux unités de refroidissement distinctes alimentées par une unité de production d'électricité photovoltaïque.

La demande décrit une installation de climatisation solaire, qui ne fait pas partie de l'invention et qui ne présente pas les inconvénients de celles proposées antérieurement et permettant une valorisation du solaire même lorsque les besoins de froid et les besoins de chauffage sont réduits, typiquement en intersaison d'un climat tempéré.

L'installation de climatisation solaire permet de réduire la consommation d'énergie primaire ainsi que les émissions de CO₂.

L'installation de climatisation solaire permet de soulager un réseau électrique lorsque l'ensoleillement et les besoins en climatisation sont élevés.

L'installation de climatisation solaire permet une autoconsommation, à partir de l'électricité solaire, capable d'accommoder la variabilité de l'alimentation électrique due à la variabilité de l'ensoleillement.

L'installation de climatisation solaire est adapté aux bâtiments du secteur tertiaire ou aux entrepôts, avec des puissances frigorifiques de quelques centaines de watts à quelques dizaines de mégawatts.

Il est décrit une installation de climatisation solaire, qui ne fait pas partie de l'invention, comprenant une unité de production photovoltaïque, un accumulateur d'énergie thermique, un groupe frigorifique comprenant un compresseur, le groupe frigorifique et l'accumulateur d'énergie thermique étant placés en série, l'installation comprenant des moyens de commande de la puissance électrique absorbée en fonction de la puissance électrique provenant de l'unité de production photovoltaïque.

Selon diverses réalisations, l'installation présente les caractères suivants, le cas échéant combinés :
- l'accumulateur d'énergie thermique comprend un accumulateur à glace ;
- le groupe frigorifique comprend un compresseur à vis ou un compresseur spiro orbital un compresseur turbine ou à deux chambres de compression (twin rotary) ;
- le compresseur est spiro orbital à régulation de vitesse de rotation
- l'installation comprend deux groupes frigorifiques fonctionnant en parallèle, un fluide caloporteur faisant la liaison entre les évaporateurs ;
- les moyens de commande du groupe frigorifique comprennent un automate programmable industriel intégrant la commande de puissance du compresseur ;
- le groupe frigorifique est alimenté par un réseau électrique général et par l'unité de production photovoltaïque, l'automate programmable industriel gérant l'alimentation en puissance du groupe frigorifique en provenance soit de l'unité de production photovoltaïque, soit du réseau électrique général, soit des deux sources simultanément ;
- l'automate programmable industriel commande l'accumulateur d'énergie thermique, pour le stockage d'énergie comme pour le déstockage d'énergie ;
- l'installation comprend des moyens de récupération de chaleur de l'air ambiant, les moyens de récupération de chaleur comprennent un surchauffeur ou une pompe à chaleur.

L'invention se rapporte à un procédé de contrôle d'une installation de climatisation solaire telle que présentée ci-dessus, ce procédé comprenant les étapes suivantes :
- distinction entre période diurne et période nocturne ;
- mesure de la puissance électrique fournie par l'unité de production photovoltaïque ;
- comparaison entre une valeur de puissance électrique seuil et la valeur de la puissance électrique fournie par l'unité de production photovoltaïque ;
- lorsque la valeur de la puissance électrique fournie par l'unité de production photovoltaïque dépasse la valeur seuil, comparaison entre le stock de froid disponible et une valeur seuil prédéterminée ;
- lorsque la valeur de stock de froid disponible est inférieure à la valeur seuil, commande du groupe frigorifique avec une puissance électrique absorbée égale à la puissance électrique fournie par l'unité de production photovoltaïque.

Selon un autre aspect, l'invention se rapporte à la commande d'une installation telle que présentée ci-dessus, le procédé comprenant les étapes suivantes :
- détermination du stock de froid disponible dans l'accumulateur thermique ;
- comparaison entre le stock de froid disponible et une valeur seuil ;
- lorsque la valeur de stock de froid disponible est inférieure à la valeur seuil, détermination d'un prévisionnel de production de l'unité photovoltaïque en fonction des données météorologique ;
- lorsque le prévisionnel de production est inférieur à une valeur seuil, commande de la puissance du groupe frigorifique à une puissance absorbée égale à sa puissance nominale.

Selon diverses mises en oeuvre, le procédé présente les caractères suivants, le cas échéant combinés :
- la commande du groupe frigorifique avec une puissance électrique absorbée égale à la puissance électrique fournie par l'unité de production photovoltaïque est assurée pendant un temps de temporisation prédéterminé ;
- la commande de la puissance du groupe frigorifique à une puissance absorbée égale à sa puissance nominale est maintenue tant que le stock de froid disponible n'a pas dépassé une valeur seuil prédéterminée ;
- le procédé comprend une étape préalable de distinction d'un fonctionnement en jour ouvrables et non ouvrables.

D'autres objets et avantages de l'invention apparaîtront à la lumière de la description de modes de réalisation, faite ci-après en référence aux dessins annexés dans lesquels :
- la figure 1 est un schéma présentant un dispositif de climatisation solaire photovoltaïque ;
- la figure 2 est un diagramme présentant un procédé de régulation d'un dispositif de climatisation solaire photovoltaïque.

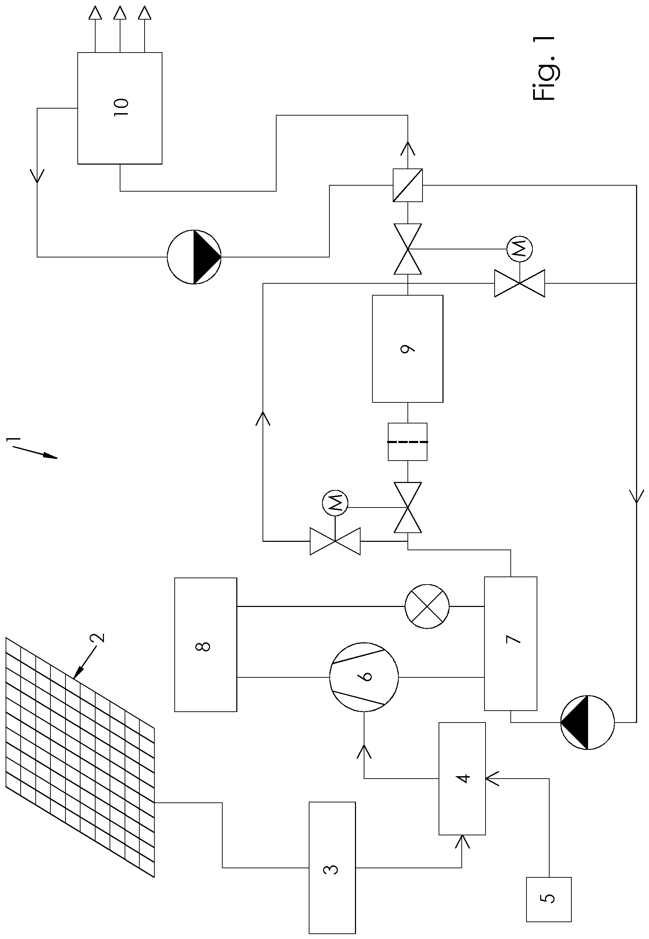

On se reporte tout d'abord à la figure 1 qui représente schématiquement une installation de climatisation solaire.

Dans la suite de cette description de schéma fluidique, les robinets à deux voies, filtres, moteurs représentés sont connus en eux-mêmes de l'homme du métier et ne seront pas décrits en détail.

Le dispositif 1 de climatisation solaire photovoltaïque comprend une unité 2 de production électrique solaire reliée à un onduleur 3 connecté à un tableau général basse tension 4 (TGBT).

Le courant alternatif provenant du réseau externe 5 ou de l'unité 2 alimente un compresseur 6 d'un groupe frigorifique, ce groupe comprenant un évaporateur 7 et un condenseur 8. Une électrovanne et un détendeur sont placés entre l'évaporateur 7 et le condenseur 8.

L'unité 2 de production électrique solaire est dimensionnée pour fournir une puissance minimum tenant compte de la charge thermique d'un bâtiment.

Les panneaux photovoltaïques sont avantageusement placés en toiture du bâtiment à climatiser et/ou en façade de ce bâtiment.

En variante, les panneaux PV peuvent être placés au sol ou sur un autre bâtiment.

Suivants diverses réalisations, les panneaux photovoltaïques sont de type silicium monocristallin, silicium polycristallin ou silicium amorphe.

Le silicium polycristallin peut être de type gros grains mc-Si, avantageusement à faibles impuretés métalliques.

Dans d'autres réalisations, les panneaux PV comportent des cellules en couche mince à base de di-séléniure de cuivre et d'indium CuInSe₂ ou bien encore des cellules en cuivre indium gallium sélénium CIGS, cellules en tellure de cadmium CdTe.

Dans une réalisation, le compresseur 6 est un compresseur volumétrique à vis, par exemple du type comprenant un rotor mâle et un rotor femelle tournant l'un vers l'autre tandis que le volume situé entre eux et le carter de compression diminue.

Dans une autre réalisation, le compresseur 6 est de type spiro-orbital (*scroll*) à régulation de vitesse de rotation (*inverter*), permettant d'atteindre des rendements élevés et des niveaux sonores faibles. Le démarrage du compresseur s'effectue à basse vitesse, contrairement au fonctionnement de type marche/arrêt, la pointe de courant nécessaire au démarrage étant ainsi fortement diminuée.

La régulation de puissance du compresseur 6 est avantageusement à étage, deux groupes frigorifiques fonctionnant en parallèle, un fluide caloporteur faisant la liaison entre les évaporateurs. Cette disposition à sûreté intégrée assure un maintien de fonctionnement en cas de défaillance d'un groupe.

Le tableau suivant présente, à titre d'exemple, des caractéristiques de compresseurs pouvant être employés.

| Type de compresseur | Vis | Vis | Spiro-orbital avec inverter |
|---|---|---|---|
| Régulation de puissance | Stepless | Stepless | Step |
| Puissance froide fournie | 76.2 kW | 69.3 kW | 50.0 kW |
| Puissance absorbée | 32.4 kW | 34.0 kW | 32.4 kW |
| Température eau glacée | -3°C/+2°c | -3°C/+1°C | -3°C/+1°C |
| Température air extérieur | 35°C | 35°C | 35°C |
| □ p Evaporateur | 12.80 kPa | 23.00 kPa | 84.54 kPa |
| Puissance ventilateur | 2.40 kW | 2.40 kW | - |
| Intensité max au démarrage | 125 A | 151 A | 120.7 A |
| Intensité en fonctionnement | 91 A | 83 A | 67.2 A |
| Cos □ | 0.87 | 0.94 | - |
| Coefficient d'efficacité frigorifique EER | 2.23 | 2.04 | 1.6 |
| ESEER* | 3.83 | 2.92 | 3.64 |
| Fluide frigorigène | R407C | R134A | R410A |
| ODP** | 10⁻⁵ | <1.5 10⁻⁵ | <2 10⁻⁵ |
| GWP*** | 1.70 | 1.32 | 1.89 |
| Récupérateur de chaleur | désurchauffeur | désurchauffeur | PAC air/eau |

| | | | |
|---|---|---|---|
| * European Seasonal Energy Effiency Ratio ** Ozone Depletion Potential, potentiel d'appauvrissement de l'ozone *** GWP Global Warning Potential, potentiel de réchauffement global | | | |

Le dispositif 1 comprend un accumulateur 9 de glace, placé en série en aval du groupe frigorifique. Dans une réalisation, le stockage de glace comprend une cuve contenant des récipients remplis d'un mélange eutectique de sels, les échanges thermiques s'effectuant par circulation dans la cuve d'un fluide frigoporteur. Dans une autre réalisation, un flux d'eau glycolée passe dans des échangeurs placés dans une cuve contenant de l'eau, servant d'agent de stockage. Ces échangeurs sont par exemple des tubes disposés parallèlement les uns aux autres, ou bien encore enroulés en spirale. Des accumulateurs à glace sont connus en eux-mêmes et commercialisés par exemple par les sociétés Fafco, Evapco, Vritherm, Consolar.

L'accumulateur de glace est placé en série et en amont des circuits CVC 10 de chauffage, ventilation et climatisation. Les terminaux de CVC comprennent avantageusement des ventilo convecteurs à haute efficacité énergétique. Avantageusement, les ventilo convecteurs sont équipés d'une vanne adaptant l'apport en fonction de l'occupation des locaux et de l'activité des occupants, grâce à des sondes de CO₂.

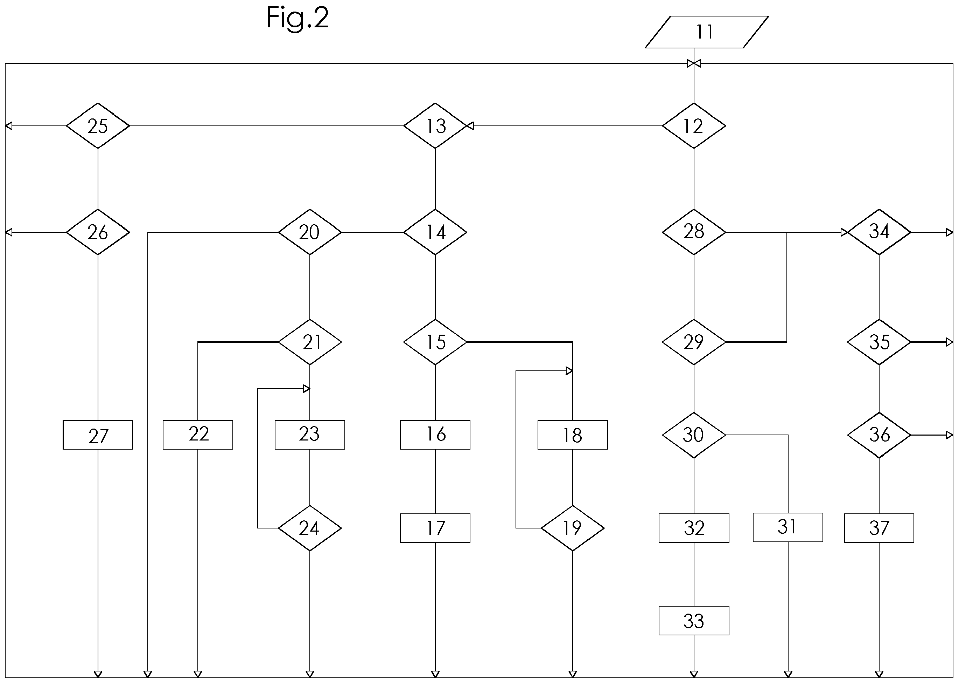

L'on se rapporte à la figure 2 qui représente la commande de régulation 11 du compresseur 6. Dans une mise en œuvre avantageuse, cette commande est assurée par un automate programmable industriel (API) et assure le pilotage d'un inverter.

La figure 2 illustre une commande de régulation dans une application à la climatisation d'un bâtiment tertiaire. Pour cette application, dans une première étape 12 l'automate différencie un fonctionnement en jours non ouvrables d'un fonctionnement en jours ouvrables. Dans d'autres applications pour lesquelles une climatisation en continu est nécessaire, par exemple entrepôts, data center, cette première étape 12 est absente ou neutralisée.

Lorsque l'automate détermine un fonctionnement en jours ouvrables, une deuxième étape 13 différencie un fonctionnement en période diurne d'un fonctionnement en période nocturne. Par « période diurne » on désigne une tranche horaire comprenant les heures d'occupation du bâtiment, par exemple de 6h à 21h.

Lorsque l'automate détermine un fonctionnement en période diurne, une troisième étape 14 mesure la puissance électrique photovoltaïque disponible et la compare à une valeur seuil permettant le déclanchement du compresseur 6 du groupe frigorifique. Lorsque l'automate détermine que la puissance électrique photovoltaïque disponible est supérieure à la valeur seuil, une quatrième étape 15 mesure le stock de froid disponible dans l'accumulateur à glace 9 et compare ce stock à un seuil haut, par exemple de 90% du stock maximum.

Si le stock de froid disponible est inférieur à ce seuil haut, l'automate commande dans une étape 16 le démarrage du compresseur 6, avec une puissance absorbée égale à la puissance électrique disponible. Avantageusement, une temporisation 17 assure un fonctionnement du compresseur 6 pendant une durée minimum, cette mesure préservant la durée de vie du compresseur 6 et les performances de l'installation. La durée de fonctionnement minimum est par exemple de dix minutes.

Si le stock de froid disponible est déterminé, lors de l'étape 15, comme supérieur au seuil haut, la puissance absorbée par le compresseur 6 est fixée à zéro dans une étape 18 et l'automate laisse dériver le stockage de froid jusqu'à un seuil intermédiaire, par exemple de 70 % du stock maximum, par une boucle 19.

Lorsque, à l'étape 14, l'automate a déterminé que la puissance électrique photovoltaïque disponible était inférieure à un seuil permettant le démarrage du compresseur 6, une étape 20 détermine si le stock de froid est inférieur à un seuil bas, par exemple de 20 % du stock maximum. Si le stock de froid est inférieur à ce seuil bas, la possibilité d'une production d'électricité solaire à court terme est testée, dans une étape 21, par exemple par connexion à une plateforme d'information météorologique. Si le prévisionnel à court terme, par exemple une heure, est défavorable à une production photovoltaïque, une temporisation 22 est fixée. Si le prévisionnel à court terme est favorable, l'automate commande dans une étape 23 le compresseur à une puissance absorbée égale à la puissance nominale du groupe frigorifique, et maintien cette commande tant que le stock de froid dans l'accumulateur 9 reste inférieur à une valeur seuil, par exemple 40 % du stock maximum, au moyen d'une boucle 24.

Lorsqu'à l'étape 13, l'automate a identifié un fonctionnement en période nocturne, une comparaison du stock de froid est effectuée, dans une étape 25, avec une valeur de réserve, par exemple de 40% du stock maximum. Si le stock de froid est inférieur à cette valeur de réserve, la possibilité d'une production d'électricité solaire à court terme est testée, dans une étape 26, par exemple par connexion à une plateforme d'information météorologique. Si le prévisionnel à court terme, par exemple une heure, est défavorable à une production photovoltaïque, l'automate commande dans une étape 27 le compresseur à une puissance absorbée égale à la puissance nominale du groupe frigorifique.

L'on décrit maintenant le fonctionnement de l'automate lorsqu'à l'étape 12 un fonctionnement en jours non ouvrable est déterminé, correspondant à une fin de semaine. L'automate différencie, dans une étape 28 un fonctionnement en période diurne ou nocturne. Si un fonctionnement en période diurne est identifié, l'automate détermine, dans une étape 29 si la puissance électrique photovoltaïque disponible est supérieure à une valeur seuil permettant le démarrage du compresseur 6. Lorsque la puissance est supérieure à cette valeur seuil, une comparaison du stock de froid avec une valeur seuil haute est effectuée, dans une étape 30, la valeur seuil haute étant par exemple de 90% du stock maximum. Si le stock de froid est supérieur à cette valeur seuil haut, le compresseur est commandé en arrêt, dans une étape 31. Si le stock de froid est inférieur au seuil haut, l'automate commande la marche du compresseur à une puissance absorbée égale à la puissance disponible, dans une étape 32. Avantageusement, une temporisation 33 assure un fonctionnement du compresseur 6 pendant une durée minimum, cette mesure préservant la durée de vue du compresseur 6 et les performances de l'installation. La durée de fonctionnement minium est par exemple de dix minutes.

Lorsqu'à l'étape 28, l'automate a déterminé un fonctionnement en période nocturne, un fonctionnement en veille de jour ouvrable est déterminé, dans une étape 34. Si l'automate a identifié un fonctionnement en veille de jour ouvrable, le stock de froid est comparé dans une étape 35 à une valeur seuil, par exemple de 30% du stock maximum. Lorsque le stock de glace est inférieur à une valeur seuil, la possibilité d'une production d'électricité solaire à court terme est testée, dans une étape 36, par exemple par connexion à une plateforme d'information météorologique. Si le prévisionnel à court terme, par exemple une heure, est défavorable à une production photovoltaïque, l'automate commande dans une étape 37 le compresseur à une puissance absorbée égale à la puissance nominale du groupe frigorifique.

Le fonctionnement du groupe frigorifique est dicté prioritairement par l'énergie électrique produite par l'unité 2.

Comme illustrée en figure 2, l'installation 1 fonctionne de manière très souple et notamment selon quatre modes :
- fonctionnement simultané du groupe frigorifique et de l'accumulateur 9 de glace en stockage de glace pour l'alimentation des circuits CVC 10 ;
- fonctionnement simultané du groupe frigorifique et de l'accumulateur 9 de glace en déstockage de glace en alimentation des circuits CVC 10 ;
- fonctionnement du groupe frigorifique pour un stockage de glace dans l'accumulateur 9 de glace, les circuits CVC 10 étant à l'arrêt ;
- fonctionnement de l'accumulateur 9 de glace en mode déstockage pour alimentation des circuits CVC 10, le groupe frigorifique étant à l'arrêt.

L'automate assure la gestion de l'ensemble des paramètres d'alimentation électrique de l'installation, en priorité par l'électricité issue de l'unité 2, le courant du réseau 5 assurant une sécurité de l'alimentation de l'installation 1. L'automate assure la régulation de la capacité de production du groupe frigorifique, et commande l'engagement des phases de stockage et de déstockage de glace dans l'accumulateur 9. L'automate assure également la mise en régime de l'installation 1 après arrêt.

Avantageusement, l'installation assure une récupération de chaleur, permettant de combattre les déperditions du bâtiment et assurant le traitement de l'air neuf durant les saisons froides.

Dans certaines mises en œuvre, l'installation comporte un ou des surchauffeurs, le réseau chaud étant indépendant du réseau d'eau glacée.

Dans d'autres réalisations, l'installation comporte une ou des pompes à chaleur air/eau.

L'invention présente de nombreux avantages.

Elle permet l'utilisation de l'électricité au tarif les plus bas, la puissance des groups frigorifiques étant minimisée.

L'automate assure une commande de l'installation allant au-delà d'un fonctionnement marche/arrêt de type déstockage (machine frigorifique à l'arrêt pendant le jour et fonctionnement en déstockage de glace), écrêtage (injection de froid issu du déstockage de glace lorsque les groupe frigorifiques ne sont plus en mesure de couvrir la totalité des besoins), effacement (arrêt des groupes frigorifiques durant les heures de pointe où le prix du kWh est élevé, le déstockage de glace prenant alors le relais).

Le groupe frigorifique peut être dimensionné de sorte à fonctionner le plus souvent à sa puissance nominale avec un rendement élevé.

Lors de l'inoccupation des locaux, la production d'énergie photovoltaïque est valorisée par stockage de glace.

## Revendications

1. Procédé de contrôle d'une installation de climatisation solaire, l'installation comprenant une unité (2) de production photovoltaïque, un accumulateur (9) d'énergie thermique, un groupe frigorifique comprenant un compresseur (6), le groupe frigorifique et l'accumulateur (9) d'énergie thermique étant placés en série, l'installation comprenant des moyens de commande de la puissance électrique absorbée en fonction de la puissance électrique provenant de l'unité (2) de production photovoltaïque , le procédé étant **caractérisé en ce qu'**il comprend les étapes suivantes :
- distinction (13, 28) entre période diurne et période nocturne ;
- mesure de la puissance électrique fournie par l'unité (2) de production photovoltaïque ;
- comparaison (14, 29) entre une valeur de puissance électrique seuil et la valeur de la puissance électrique fournie par l'unité (2) de production photovoltaïque ;
- lorsque la valeur de la puissance électrique fournie par l'unité (2) de production photovoltaïque dépasse la valeur seuil, comparaison (15, 30) entre le stock de froid disponible et une valeur seuil prédéterminée ;
- lorsque la valeur du stock de froid disponible est inférieure à la valeur seuil, commande (16, 32) du groupe frigorifique avec une puissance électrique absorbée égale à la puissance électrique fournie par l'unité (2) de production photovoltaïque.

2. Procédé selon la revendication 1, **caractérisé en ce que** la commande (16, 32) du groupe frigorifique avec une puissance électrique absorbée égale à la puissance électrique fournie par l'unité (2) de production photovoltaïque est assurée pendant un temps de temporisation (17, 33) prédéterminé.

3. Procédé selon la revendication 1 ou 2, **caractérisé en ce que** qu'il comprend les étapes suivantes :
- détermination du stock de froid disponible dans l'accumulateur thermique ;
- comparaison (20, 25, 35) entre le stock de froid disponible et une valeur seuil ;
- lorsque la valeur de stock de froid disponible est inférieure à la valeur seuil, détermination (21, 26, 36) d'un prévisionnel de production de l'unité (2) photovoltaïque en fonction des données météorologique ;
- lorsque le prévisionnel de production est inférieur à une valeur seuil, commande (23, 27, 37) de la puissance du groupe frigorifique à une puissance absorbée égale à sa puissance nominale.

4. Procédé selon la revendication 3, **caractérisé en ce que** la commande (23) de la puissance du groupe frigorifique à une puissance absorbée égale à sa puissance nominale est maintenue tant que le stock de froid disponible n'a pas dépassé une valeur seuil prédéterminée.

5. Procédé selon l'une quelconque des revendications 1 à 4, **caractérisé en ce qu'**il comprend une étape préalable de distinction d'un fonctionnement en jour ouvrables et non ouvrables.

6. Procédé selon l'une quelconque des revendications 1 à 5, **caractérisé en ce que** l'accumulateur (9) d'énergie thermique comprend un accumulateur à glace.

7. Procédé selon l'une quelconque des revendications 1 à 6, **caractérisé en ce que** l'installation comprend deux groupe frigorifiques fonctionnant en parallèle, un fluide caloporteur faisant la liaison entre les évaporateurs.

8. Procédé selon l'une quelconque des revendications 1 à 7, **caractérisé en ce que** les moyens de commande du groupe frigorifique comprennent un automate programmable industriel intégrant la commande de puissance du compresseur.

9. Procédé selon la revendication 8, **caractérisé en ce que** le groupe frigorifique est alimenté par un réseau électrique général (5) et par l'unité (2) de production photovoltaïque, l'automate programmable industriel gérant l'alimentation en puissance du groupe frigorifique en provenance soit de l'unité (2) de production photovoltaïque, soit du réseau électrique général (5), soit des deux sources simultanément.

10. Procédé selon la revendication 9, **caractérisé en ce que** l'automate programmable industriel commande l'accumulateur (9) d'énergie thermique, pour le stockage d'énergie comme pour le déstockage d'énergie.

## Patentansprüche

1. Verfahren zur Steuerung einer Solarklimaanlage, wobei die Anlage eine photovoltaische Produktionseinheit (2), einen Akkumulator (9) thermischer Energie, eine einen Kompressor (6) umfassende Kühleinheit umfasst, wobei die Kühleinheit und der Akkumulator (9) thermischer Energie in Reihe platziert sind, wobei die Anlage Steuermittel der in Abhängigkeit von der elektrischen Leistung, die von der photovoltaischen Produktionseinheit (2) kommt, aufgenommenen elektrischen Leistung hat, wobei das Verfahren **dadurch gekennzeichnet ist, dass** es die folgenden Schritte umfasst:
- Unterscheiden (13, 28) zwischen Tagperiode und Nachtperiode;
- Messen der von der photovoltaischen Produktionseinheit bereitgestellten elektrischen Leistung;
- Vergleichen (14, 29) zwischen einem elektrischen Grenzleistungswert und dem Wert der elektrischen Leistung, die von der photovoltaischen Produktionseinheit bereitgestellt wird;
- wenn der Wert der elektrischen Leistung, die von der photovoltaischen Produktionseinheit (2) bereitgestellt wird, den Grenzwert überschreitet, Vergleichen (15, 30) zwischen dem verfügbaren Kältevorrat und einem vorher festgelegten Grenzwert;
- wenn der Wert des verfügbaren Kältevorrats unter dem Grenzwert liegt, Steuerung (16, 32) der Kühleinheit mit einer aufgenommenen elektrischen Leistung, die gleich der von der photovoltaischen Produktionseinheit bereitgestellten elektrischen Leistung ist.

2. Verfahren nach Anspruch 1, **dadurch gekennzeichnet, dass** die Steuerung (16, 32) der Kühleinheit mit einer aufgenommenen elektrischen Leistung, die gleich der von der photovoltaischen Produktionseinheit bereitgestellten elektrischen Leistung ist, während einer vorher festgelegten Taktzeit (17, 33) gesichert ist.

3. Verfahren nach Anspruch 1 oder 2, **dadurch gekennzeichnet, dass** es die folgenden Schritte umfasst:
- Bestimmen des im thermischen Akkumulator verfügbaren Kältevorrats;
- Vergleichen (20, 25, 35) zwischen dem verfügbaren Kältevorrat und einem Grenzwert;
- wenn der Wert des verfügbaren Kältevorrats unter dem Grenzwert liegt, Bestimmen (21, 26, 36) einer Produktionsplanung der Photovoltaikeinheit in Abhängigkeit von den meteorologischen Daten;
- wenn die Produktionsplanung unter einem Grenzwert liegt, Steuerung (23, 27, 37) der Leistung der Kühleinheit mit einer aufgenommenen Leistung, die gleich ihrer nominalen Leistung ist.

4. Verfahren nach Anspruch 3, **dadurch gekennzeichnet, dass** die Steuerung (23) der Leistung der Kühleinheit mit einer aufgenommenen Leistung, die gleich ihrer nominalen Leistung ist, aufrechterhalten wird, solange der verfügbare Kältevorrat einen vorher festgelegten Grenzwert nicht überschritten hat.

5. Verfahren nach einem der Ansprüche 1 bis 4, **dadurch gekennzeichnet, dass** es einen vorherigen Schritt der Unterscheidung eines Betriebs an einem Werktag und an einem Nicht-Werktag umfasst.

6. Verfahren nach einem der Ansprüche 1 bis 5, **dadurch gekennzeichnet, dass** der Akkumulator (9) thermischer Energie einen Eis-Akkumulator umfasst.

7. Verfahren nach einem der Ansprüche 1 bis 6, **dadurch gekennzeichnet, dass** die Anlage zwei parallel arbeitende Kühleinheiten umfasst, wobei ein Wärmeträgerfluid die Verbindung zwischen den Verdampfern herstellt.

8. Verfahren nach einem der Ansprüche 1 bis 7, **dadurch gekennzeichnet, dass** die Steuermittel der Kühleinheit eine programmierbare Industrieautomatik umfassen, der die Steuerung der Leistung des Kompressors integriert.

9. Verfahren nach Anspruch 8, **dadurch gekennzeichnet, dass** die Kühleinheit von einem allgemeinen Stromnetz (5) und von der photovoltaischen Produktionseinheit (2) versorgt wird, wobei die programmierbare Industrieautomatik die Versorgung der Kühleinheit mit Leistung entweder von der photovoltaischen Produktionseinheit (2) oder vom allgemeinen Stromnetz (5) oder von den zwei Quellen gleichzeitig verwaltet.

10. Verfahren nach Anspruch 9, **dadurch gekennzeichnet, dass** die programmierbare Industrieautomatik den Akkumulator (9) thermischer Energie für das Speichern von Energie als auch für das Auslagern von Energie steuert.

## Claims

1. Method for controlling a solar air conditioning installation, the installation comprising a photovoltaic production unit (2), a thermal energy accumulator (9), a refrigeration unit comprising a compressor (6), the refrigeration unit and the thermal energy accumulator (9) being placed in series, the installation comprising means for controlling the absorbed electrical power as a function of the electrical power coming from the photovoltaic production unit (2), the method being **characterised in that** it comprises the following steps:
- distinction (13, 28) between day time and night time;
- measurement of the electrical power supplied by the photovoltaic production unit (2);
- comparison (14, 29) between a threshold electrical power value and the value of the electrical power supplied by the photovoltaic production unit (2);
- when the value of the electrical power supplied by the photovoltaic production unit (2) exceeds the threshold value, comparison (15, 30) between the available cold store and a predetermined threshold value;
- when the value of the available cold store is below the threshold value, control (16, 32) of the refrigeration unit with an absorbed electrical power equal to the electrical power supplied by the photovoltaic production unit (2).

2. Method according to claim 1, **characterised in that** the control (16, 32) of the refrigeration unit with an absorbed electrical power equal to the electrical power supplied by the photovoltaic production unit (2) is ensured during a predetermined delay time (17, 33).

3. Method according to claim 1 or 2, **characterised in that** it comprises the following steps:
- determination of the cold store available in the thermal accumulator;
- comparison (20, 25, 35) between the available cold store and a threshold value;
- when the available cold store value is below the threshold value, determination (21, 26, 36) of a forecast of the production of the photovoltaic unit (2) as a function of meteorological data;
- when the production forecast is below a threshold value, control (23, 27, 37) of the power of the refrigeration unit with an absorbed power equal to its rated power.

4. Method according to claim 3, **characterised in that** the control (23) of the power of the refrigeration unit with an absorbed power equal to its rated power is maintained as long as the available cold store has not exceeded a predetermined threshold value.

5. Method according to any one of claims 1 to 4, **characterised in that** it comprises a prior step of distinction of an operation on working days and non-working days.

6. Method according to any one of claims 1 to 5, **characterised in that** the thermal energy accumulator (9) comprises an ice accumulator.

7. Method according to any one of claims 1 to 6, **characterised in that** the installation comprises two refrigeration units operating in parallel, a heat transfer fluid making the connecting between the evaporators.

8. Method according to any one of claims 1 to 7, **characterised in that** the means for controlling the refrigeration unit comprise an industrial programmable automaton integrating the power control of the compressor.

9. Method according to claim 8, **characterised in that** the refrigeration unit is supplied by a general electrical grid (5) and by the photovoltaic production unit (2), the industrial programmable automaton managing the power supply of the refrigeration unit coming from either from the photovoltaic production unit (2), or from the general electrical grid (5), or from both sources simultaneously.

10. Method according to claim 9, **characterised in that** the industrial programmable automaton controls the thermal energy accumulator (9), for the storage of energy as for the withdrawal of energy.
